# EUROPEAN PATENT SPECIFICATION

(11) **EP 1 194 905 B1**
(45) Date of publication and mention of the grant of the patent: **12.03.2003**
(21) Application number: 00931418.8
(22) Date of filing: 24.05.2000
(51) Int. Cl.: G07F 7/10

(54) **PORTABLE TERMINAL**
TRAGBARES ENDGERÄT
TERMINAL PORTABLE

(30) Priority: 30.06.1999 GB 9915121; 03.12.1999 GB 9928734
(43) Date of publication of application: 10.04.2002
(73) Proprietor: NCR INTERNATIONAL INC., Dayton, Ohio 45479 (US)
(72) Inventor: SAVAGE, John Gerard, Tayport, Fife DD6 9BW (GB); GROSSI, Mark Michael, Muirhead, Dundee DD2 5QG (GB); COVENTRY, Lynne Margaret, Edinburgh EH9 1AS (GB); GRAYSON, David, Burntisland, Fife KY3 9JH (GB); FORREST, Simon, James, Dundee DD3 6BW (GB); GARDNER, John, Pitlessie, Fife KY15 7SL (GB); CARNEGIE, Steven Alexander, Blairgowie, Perthshire PH10 6SX (GB); PETERS, Kenneth James, Ninewells, Dundee DD2 1RE (GB)
(74) Representative: Williamson, Brian
(86) International application number: GB0001988
(87) International publication number: WO01003086

(56) References cited:
- WO-A-99/08238
- US-A- 5 870 473
- PATENT ABSTRACTS OF JAPAN vol. 1998, no. 11, 30 September 1998 (1998-09-30) & JP 10 162243 A (HITACHI LTD), 19 June 1998 (1998-06-19)
- PATENT ABSTRACTS OF JAPAN vol. 016, no. 495 (P-1436), 14 October 1992 (1992-10-14) & JP 04 178896 A (NEC CORP), 25 June 1992 (1992-06-25)

## Description

The present invention relates to a portable terminal. In particular, the invention relates to a portable terminal for use with a self-service terminal (SST) such as an automated teller machine (ATM) or a financial services centre (FSC). The invention also relates to a transaction system including a portable terminal, and to a method of conducting a transaction using a portable terminal.

When a user operates an ATM, the ATM first identifies the user. This is typically achieved by the user inserting an identification token (such as a magnetic stripe card) to claim an identity and then entering an identification number (PIN) to verify the claimed identity. However, other means of identifying a user are available, for example, using biometrics-based recognition techniques.

After the user has been identified, the ATM allows the user to choose from one or more possible transactions, which are typically displayed as menu options.

One disadvantage of this arrangement is that to conduct a transaction the user must go to an ATM in person or must entrust a third party with his/her identification card and PIN.

A disadvantage associated with card-based identification is that a third party may observe the identification number of the user, which may give rise to fraudulent use of the user's identification card.

Another disadvantage with this arrangement is that a user can only select the desired transaction or sequence of transactions while located at the ATM. This means that each user spends a considerable amount of time at the ATM while navigating through menu options. From the point of view of the owner of the ATM this is a disadvantage because the number of users that can use the ATM in a given time period is reduced. From the point of view of the user this is a disadvantage because the longer it takes to conduct a transaction the more vulnerable a user feels to theft or attack by a third party. In addition, the longer is takes to conduct a transaction the more likely it is that a user will have to queue to use the ATM.

As ATMs include more functions and features it becomes increasingly more difficult for users to navigate through the screens presented by the ATMs. This also has the effect of increasing the time taken to conduct a transaction.

There is also growing demand for ATMs to provide user interfaces that are suitable for meeting the needs of different types of users. For example, multi-lingual interfaces, interfaces for visually impaired individuals, interfaces for cognitively impaired individuals, interfaces for individuals with hearing difficulties, and such like. To cater for these different requirements an ATM requires large software programs that are expensive to design and develop.

It is an object of an embodiment of the invention to obviate or mitigate one or more of the above disadvantages.

WO 99 08238 discloses a portable terminal for securely storing card details, and for transmitting the stored details to a universal card on verification that the owner of the card details is operating the portable terminal. WO 99 08238 also discloses the use of the portable terminal for interacting directly with an ATM, where the portable terminal transmits selected card information so that the portable terminal takes the place of the users card.

JP 04 178896 discloses a portable device for entering a transaction that is to be executed on an ATM, and an ATM that stores a transmitted transaction until it is executed by a user at the ATM.

According to a first aspect of the invention there is provided a portable terminal having a communication port and a transaction interface, whereby, a user may use the transaction interface to enter a transaction for executing on a self-service terminal, characterised in that the portable terminal assigns a unique identification to the entered transaction and stores the entered transaction and the unique identification, whereby at some later time the user may transmit the entered transaction to a self-service terminal that uses the unique identification to ensure that the same transaction is not executed twice.

It should be appreciated that the transaction interface may require the user to enter an identifier, such as a password, a PIN, a biometrics identifier, or such like, prior to entering a transaction. The transaction interface may validate the identifier, or it may assume that the identifier is correct and leave validation of the identifier to the SST.

By virtue of the invention, a user is able to prepare a transaction or a series of transactions remotely from a public SST and then execute the transaction or series of transactions on arrival at the SST. This has the advantage that the transaction can be prepared in privacy, thereby avoiding fraud due to a third party observing the user's identifier (such as the user's PIN). This also has the advantage that the time taken to conduct the transaction at the SST is minimised because the transaction has already been entered.

Preferably, the communication port is adapted for wireless communication. Conveniently, the communication port is an infra-red port. The advantage of having wireless communication is that the user does not have to make any physical connection between the terminal and the SST. This is a particularly important feature where the SST is a drive-up SST, such as a drive-up ATM, as it minimises the movement that a vehicle driver must make to conduct a transaction.

Preferably, the transaction interface has a user interface element adapted to the requirements of the user. For example, the user interface element may provide an audio interface for use by a visually impaired user; alternatively and/or additionally, the user interface element may provide large font size text on a display. One advantage of having a personalised user interface is that the user is always presented with the same user interface, regardless of which SST is used to execute the transaction.

Preferably, the transaction interface has an encryption/decryption facility for storing the user's PIN to ensure that a third party cannot access the user's PIN by examining the storage area of the portable terminal.

Preferably, the terminal uses the encryption/decryption facility to encrypt any messages transmitted to an SST to prevent fraud by third parties.

The portable terminal may be a personal digital assistant (PDA), such as a Psion (trade mark) Series 5 PDA, a 3-Com (trade mark) Palm IIIx (trade mark) PDA, or such like.

Preferably, the portable terminal is operable to assign a lifetime to each transaction so that if a transaction is not executed within that time period then the terminal invalidates the transaction. The terminal may allow the user to select the length of the lifetime. Preferably, the terminal is operable to assign a delay to an entered transaction so that a transaction will not be valid until the delay has expired. The delay may be in the form of a date or time prior to which the transaction is not active.

The advantage of having a lifetime associated with each transaction is that if the terminal is lost or stolen then the transaction will be invalidated when the selected lifetime expires.

Preferably, the terminal assigns a unique identification to each transaction and transmits this unique identification with the transaction. This enables a SST receiving a transaction to compare the identification with identifications of previous transactions relating to the same account. If the identifier matches a previous identifier then the SST may signal an alarm and/or terminate the transaction. This has the advantage of avoiding the same transaction being executed twice, which is sometimes referred to as a replay attack. This also provides an audit facility, whereby a user can confirm that a transaction has been executed.

Preferably, the transaction interface is configured having a transactions pending store and a transactions executed store, whereby all unexecuted transactions are located in the transactions pending store and are automatically moved to the transactions executed store after execution. Preferably, the transaction interface removes the identifier (e.g. the PIN) prior to moving the transaction to the executed store. The advantage of having a transactions executed store is that the user has a history of previous transactions.

Preferably, the portable terminal is operable to provide different levels of access rights to a user. For example, the portable terminal may allow access to all of the functions of the terminal, or only to the transaction interface, or only to the execute transaction function provided by the transaction interface. This may be used so that the owner of the portable terminal may restrict access to other functions performed by the portable terminal and allow a third party access rights extending only to the ability to execute an entered transaction.

Preferably, the portable terminal is configurable to support multiple users, so that there may be a plurality of stored transaction interfaces. This would allow, for example, different members of a family to use the same portable terminal but to have individual transaction interfaces. Access to each transaction interface may be restricted by use of a password.

Preferably, the portable terminal is configurable to allow a user to assign a codename to a transaction, so that each transaction has a unique codename. The codename may comprise a sequence of letters and/or numbers. The codename may be self-explanatory, for example, a user may assign the codename " statement" to a transaction that requests a statement of the user's current bank account balance to be downloaded to the portable terminal. Alternatively, the codename may be a cryptic reference to a transaction type, for example, a user may assign the codename " usual" to a transaction that requests withdrawal of thirty pounds sterling; another example is where a user assigns the codename " beer money" to a transaction that requests withdrawal of twenty pounds sterling. The feature of assigning a cryptic codename to a transaction type or value is particularly advantageous if the portable terminal is used with a self-service terminal that provides audible verification of the transaction that was requested, because the verification (the spoken codename) will not be immediately understood by third parties. This provides the user with a sense of privacy and security in executing a transaction at an SST.

Another advantage of the invention is that a user may enter a transaction and give the terminal to a third party for executing the entered transaction. This has the advantage that the third party does not require to know the PIN to execute the transaction, thereby reducing the risk of theft or fraud to the value of the transaction that the user entered.

According to a second aspect of the invention there is provided a method of conducting a transaction at a self service terminal using a portable terminal, the method including the step of entering a transaction at the portable terminal remote from the self service terminal, and being characterised by the steps of: assigning a unique identification to the entered transaction, storing the entered transaction and the unique identification on the portable terminal, conveying the portable terminal to the self service terminal, and transmitting the entered transaction via a communication port connecting the portable terminal with the self service terminal so that the entered transaction is executed by the self service terminal provided the unique identification and transaction does not match a previously transmitted unique identification and transaction.

According to a third aspect of the invention there is provided a transaction system characterised by a portable terminal and a self service terminal, wherein the portable terminal and the self service terminal are operable to communicate with each other, and the portable terminal includes a transaction interface, whereby a user may use the transaction interface to enter a transaction, and at some later time may transmit the entered transaction to the self-service terminal for execution of the entered transaction.

Preferably, the self-service terminal is operable to acknowledge execution of a transaction by communicating a transaction executed identifier to the portable terminal. The transaction executed identifier may be used by the portable terminal to update information stored thereon; for example, the transaction executed identifier may include transaction details and may be used to update account information stored on the portable terminal. The identifier may also be used at some later time, in the event of a dispute, to prove to the owner of the SST that a transaction was executed.

According to a fourth aspect of the invention there is provided a self-service terminal characterised by a communication interface for receiving transaction information transmitted from a portable terminal.

Preferably, the transaction information is received in encrypted form and decrypted by the SST.

Preferably, the terminal is adapted to receive transaction information and an associated codename, whereby the terminal is operable to discriminate between the codename and the transaction, and to present the codename to a user to allow the user to confirm that the transaction associated with that codename is to be executed by the terminal.

According to a fifth aspect of the invention there is provided a method of selecting information to be presented to a user at a self-service terminal, characterised by the steps of: determining whether a user has transmitted a transaction from a portable terminal; in the event of the user having transmitting a transaction, enquiring if the user wishes to execute the transaction; in the absence of a transaction having been transmitted, presenting standard information to the user regarding how to enter a transaction using the self-service terminal.

The SST may use visual and/or audible means to enquire if the user wishes to execute the transaction.

According to a sixth aspect of the invention there is provided a self-service system characterised in that the system comprises a self-service terminal and a portable terminal, wherein a transaction may be entered remotely from the self-service terminal and executed locally to the self-service terminal.

It will be appreciated that the local execution of a transaction is subsequent to the remote entering of that transaction.

These and other aspects of the invention will be apparent from the following specific description, given by way of example, with reference to the accompanying drawings, in which:
Fig 1 is a block diagram of a portable terminal according to one embodiment of the invention;
Figs 2a to 2d are diagrams of the display of the terminal of Fig 1, showing a first set of screen configurations at different stages of entering a transaction;
Fig 3 is a block diagram of the portable terminal of Fig 1 in communication with a self-service terminal; and
Figs 4a to 4h are pictorial diagrams of the portable terminal of Fig 1 showing a second set of screen configurations.

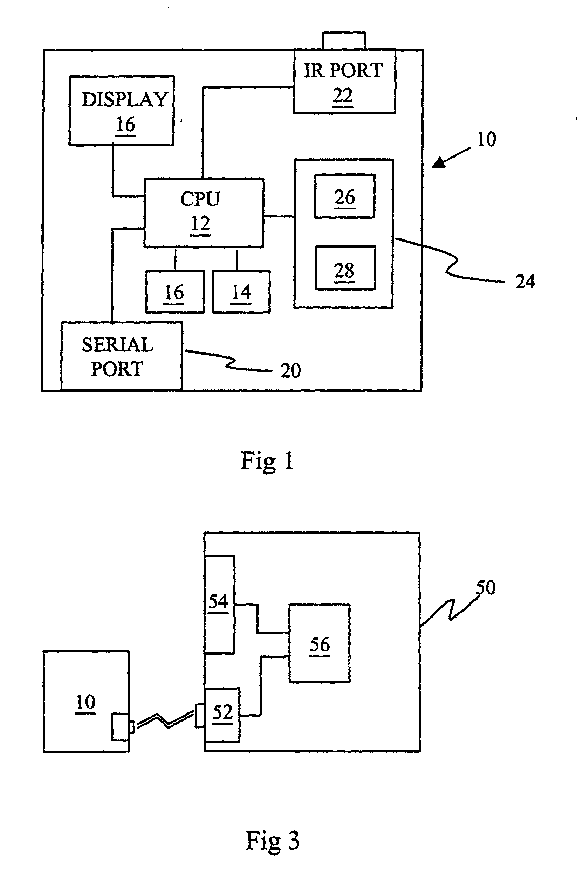

Referring to Fig 1, there is shown a block diagram of a portable terminal 10 comprising a controller 12 and associated volatile memory 14 and non-volatile memory 16, a touch-sensitive display 18, a serial communication port 20 for receiving a connector, a communication port 22 in the form of an IrDA (Infra-red data association) compliant infra-red port, and a transaction interface 24.

The terminal 10 is a standard 3Com (trade mark) PalmIII (trade mark) PDA having a software module (the transaction interface 24) downloaded to it. Controller 12 is responsible for the operation of the terminal 10, and is coupled to the display 18, serial port 20, IR port 22, and transaction interface 24.

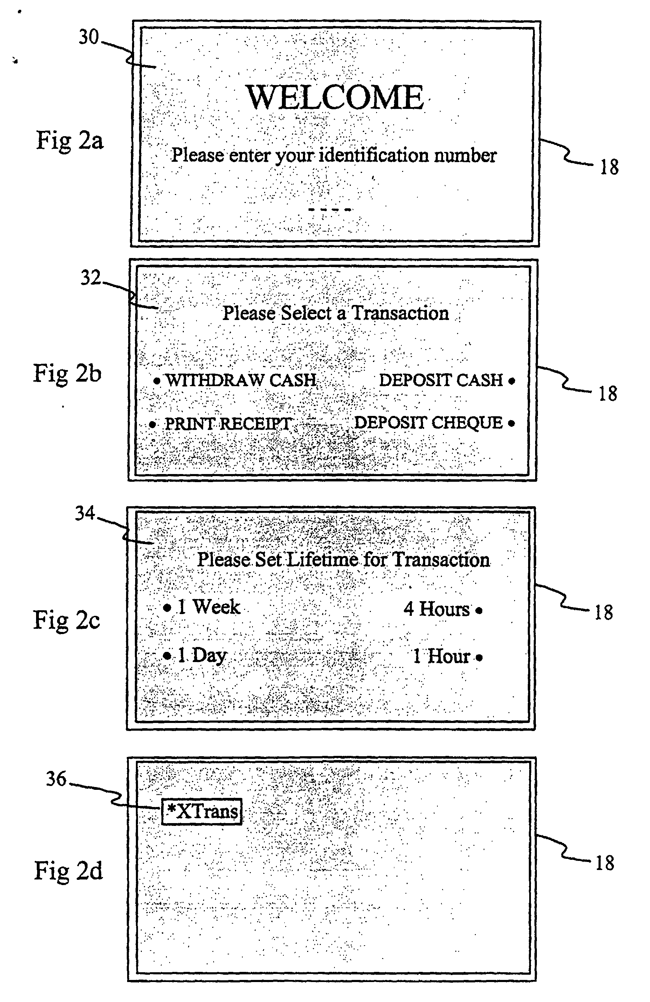

Transaction interface 24 includes a user interface element 26 and an encryption/decryption facility 28 in the form of a cryptographic module. When an ATM function is selected by a user of the terminal 10, the user interface element 26 provides the display 18 with a custom ATM interface as shown in Figs 2a to 2d.

Initially, the display 18 presents a welcome screen 30 (Fig 2a) and invites the user to enter his/her PIN. Once the user has entered the PIN, the PIN is encrypted using the encryption/decryption facility 28 and stored in memory 14. The next screen 32 (Fig 2b) provides the user with a plurality of different transactions for the user to select.

Once the user has selected one of these transactions, and entered details of the transaction where necessary, for example, if the 'withdraw cash' option is selected the user would enter the amount of cash to be withdrawn, the user is then shown the transaction lifetime screen 34 (Fig 2c).

The transaction lifetime screen 34 prompts the user to complete the transaction by setting the lifetime of the transaction, that is, the time period during which the transaction will be valid. The lifetime typically begins immediately but, in some embodiments, there may be the possibility of delaying the start of the lifetime of the transaction. This would mean that the transaction is not valid until a certain time has elapsed or until a certain time or date has been reached, the transaction then becomes valid for a predetermined time period (the lifetime), then the transaction becomes invalid again.

Once the lifetime has been set, the controller 12 uses the encryption facility 28 to encrypt the completed transaction and then stores the encrypted transaction in non-volatile memory 16. The controller 12 then causes the display 18 to present an 'Execute transaction' icon 36 to the user (Fig 2d) until such time as the transaction is executed.

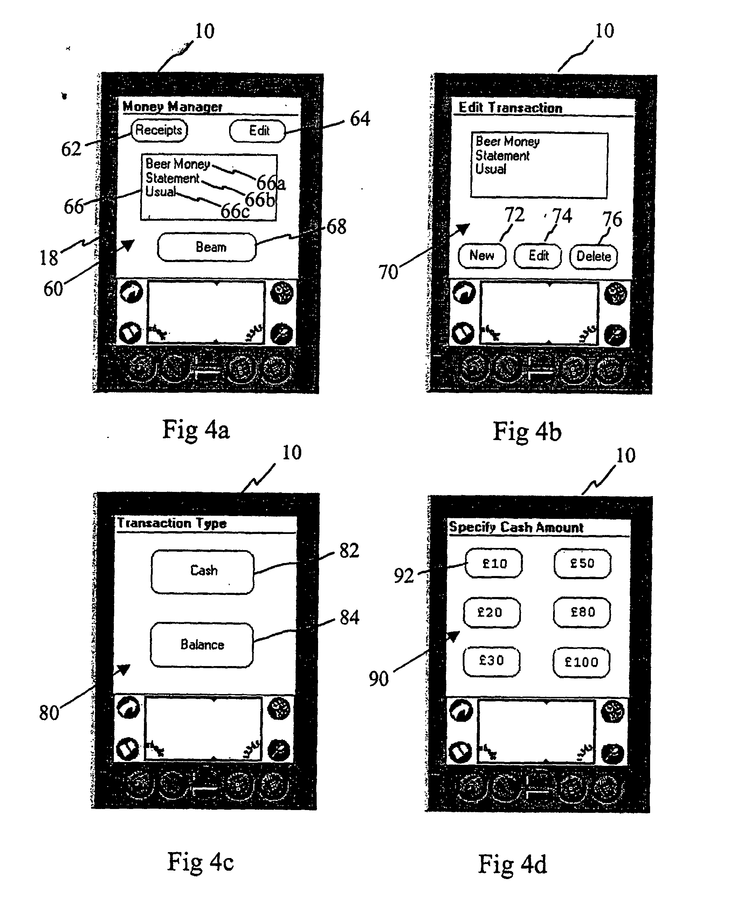

Referring to Fig 3, once the transaction has been completed, the user may convey the portable terminal 10 to a public SST 50, such as an ATM. Alternatively, the user may give the terminal 10 to a trusted third party, such as a relative, a friend, a colleague, or such like person, to convey to an ATM 50. ATM 50 has a communication interface 52 in the form of an IR to electrical signal converter. ATM 50 also has a conventional user interface 54 (which may be a touchscreen, a keypad, a loudspeaker and microphone interface, or such like) to allow the user to input transaction details manually.

When at an ATM 50, the user of the terminal 10 aligns the IR port 22 with IR converter 52 located in the ATM 50 and selects the 'Execute transaction' icon 36 on the display 18. When the controller 12 detects that icon 36 has been selected, it uses IR port 22 to transmit the encrypted completed transaction stored in memory 16 to the ATM 50. The encrypted transaction may be transmitted using a standard protocol.

IR converter 52 receives the encrypted transmission and conveys the transmission to a controller 56. When the controller 56 receives the encrypted transmission it instructs the user interface 54 to present the user with the option of executing the transmitted transaction.

If the user chooses to have the transmitted transaction executed then the controller 56 processes the transaction using the transmitted transaction details. If the user chooses not to have the transaction executed then the controller discards the transmitted transaction details.

The above example relates to a single transaction. However, multiple transactions may be prepared and displayed as separate icons on the display 18 for separate execution; or the multiple transactions may be coupled together to form one large transaction.

The user interface element 26 may allow for logical decisions to be included in the prepared transaction. For example, a balance request may be entered and if there is more than a first amount of money in the account (such as fifty pounds sterling) then a withdrawal of a second amount (such as thirty pounds) may be made; if there is not more than the first amount but there is more than a third amount (such as twenty pounds) then a withdrawal of a fourth amount (such as ten pounds) may be made; otherwise no withdrawal may be made. This allows the transaction flow to be dependent on certain conditions, such as the current state of the user's account. Other possible transactions include transfer of funds based on the amount of funds in a certain account.

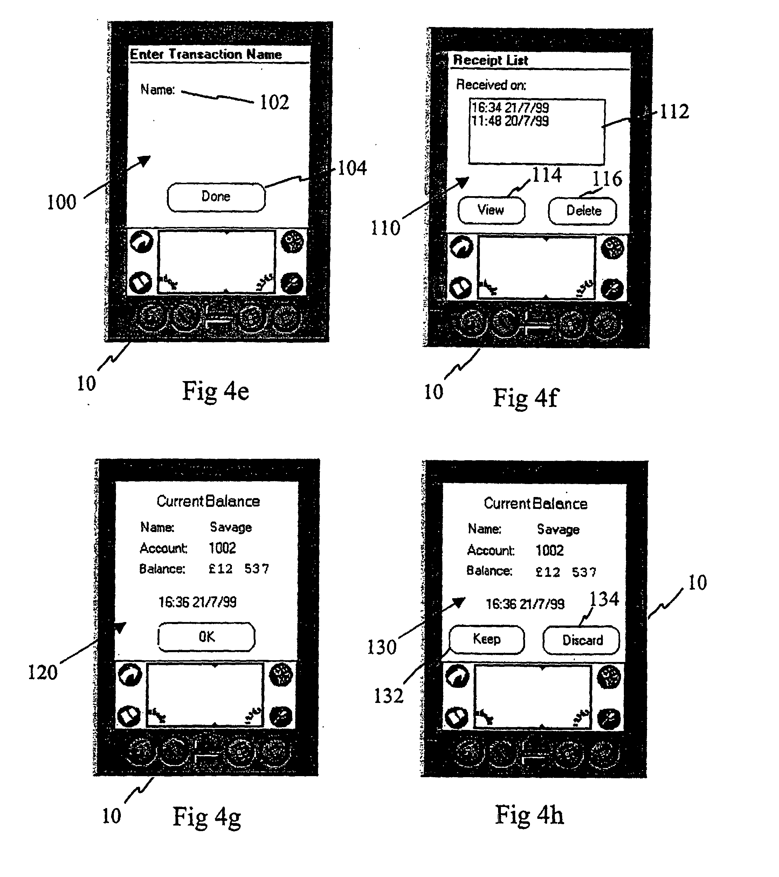

Referring now to Figs 4a to 4h, which show the portable terminal 10 having a second set of screen configurations, Fig 4a illustrates the display 18 showing a transaction selection screen 60. Screen 60 displays three user-selectable icons and a user-configurable icon list. One of the user-selectable icons (labelled " Receipts" ) 62 allows the user to view receipts that have been downloaded from an ATM 50. Another user-selectable icon (labelled " Edit" ) 64 allows the user to create or edit a new transaction. A third user-selectable icon (labelled " Beam" ) 68 allows the user to execute a selected transaction in a similar way to icon 36 (Fig 2d). The user-configurable icon list 66 includes a list of names (66a,b,c). Each name being associated with a user-defined transaction so that the user can create a transaction, associate a unique name with that transaction, and have the unique name displayed in the user-configurable icon list.

To create or edit a user-defined transaction, the user selects the " Edit" icon 64. The terminal 10 then displays an edit screen 70, as shown in Fig 4b. Edit screen 70 displays three new icons 72, 74, 76, labelled " New" , " Edit" , and " Delete" respectively. Edit screen 70 also displays the user-configurable icon list 66. As the icon labels suggest, the " New" icon 72 allows the user to create a new user-defined transaction; the " Edit" icon 74 allows the user to edit a pre-existing user-defined transaction (as shown in list 66); and the " Delete" icon 76 allows the user to delete one of the transactions from list 66. If the user selects the " New" icon 72, then screen 80 is displayed, as shown in Fig 4c.

Screen 80 provides two icons 82, 84. One icon 82 is for requesting withdrawal of cash, the other icon 84 is for requesting the current balance of the user's bank account. If the cash withdrawal icon 82 is selected then screen 90 is displayed, as shown in Fig 4d.

Screen 90 displays a plurality of icons (for example icon 92), each labelled with a different monetary value, (for example ten pounds). The user chooses the amount of cash to be withdrawn by selecting the appropriate icon on this screen 90. Once the amount to be withdrawn has been selected, the user is then presented with screen 100 to provide a name for the newly-created transaction.

Screen 100 provides a field 102 to allow the user to , enter a transaction name or phrase, which may be a cryptic codename, and an icon 104 labelled " Done" that the user can select once the transaction has been named. The name that the user enters is associated with that transaction, and the name is added to the user-configurable icon list 66 (Fig 4a).

When a pre-defined transaction is executed at an ATM 50, the ATM 50 receives the pre-defined transaction and the associated codename. The ATM 50 discriminates between the codename and the transaction, and presents the codename to the user to verify that the user wishes to execute the transaction associated with that codename. On receiving verification from the user, the ATM 50 executes the transaction.

Referring again to Fig 4a, if the user selects the receipts icon 62, then screen 110 is displayed, as shown in Fig 4f. Receipts screen 110 has a list 112 of recently received receipts, arranged in data order, for selection by the user. The receipts screen 110 also has a " View" icon 114 for viewing a selected receipt and a " Delete" icon 116 for deleting a selected receipt. If the user decides to view a selected receipt, then screen 120 is displayed, as shown in Fig 4g.

Fig 4g shows one of the receipts listed in Fig 4f. If a new receipt 130 (as shown in Fig 4h) is downloaded from an ATM 50 (Fig 3), then the new receipt 130 is displayed, and the user is given the option of storing the receipt or discarding the receipt by selecting either a " Keep" icon 132 or a " Discard" icon 134. If the new receipt is to be kept, then a receipt index (consisting of the date and time the receipt was received by the portable terminal) is added to the receipt list to reference the newly received receipt.

In other embodiments, the PIN may be stored (in encrypted form) in non-volatile memory 16 so that each time a PIN is entered by a user of the terminal 10 the entered PIN is compared with the decrypted PIN stored in memory 16, and if the two PINs are not identical then the user may not be allowed to enter any transactions. The terminal 10 may only permit a user a predetermined number of failed PIN entries before deleting the stored PIN. In other embodiments, the display 18 may not present an 'Execute transaction' icon to the user, to avoid alerting a fraudulent third party to the fact that a transaction has been completed and is awaiting execution.

In other embodiments, an alarm function in the terminal 10 may be used to alert a user to the fact that an unexecuted transaction is nearing the end of its lifetime.

In other embodiments, the transaction interface may require a password to be entered prior to execution of any completed transaction and/or prior to entering any transactions using the transaction interface 26.

In other embodiments, the portable terminal 10 may transmit information to the SST 50 about the type of user interface element 24 used, for example, the language used (English, French, German, Spanish, or such like), whether the interface 24 is primarily visual or aural, and such like. The SST 50 may use this information to adapt its user interface 54 to that of the transaction interface 24.

In other embodiments, the portable terminal may not be a PDA, it may be any convenient portable device, such as a cellular telephone, or a portable device dedicated for use with ATMs.

In other embodiments, the portable terminal may add a unique identification to each completed transaction. The identification may be a number, where the terminal increments the number after assigning it to a transaction. This unique identification may be examined by an SST executing the transaction to ensure that the same identification has not been used for that account. This would provide an additional security measure.

In other embodiments, the user may register trusted third parties so that the third parties can be given the portable terminal for preparing transactions. The third parties may be assigned access rights or may be assigned maximum values (such as thirty pounds sterling) for the transactions that they can prepare.

In other embodiments the portable terminal may include an integral biometrics unit, such as a fingerprint detector, and may store the registered user's biometrics template in a tamper-resistant secure area within the terminal. This ensures that only the registered user can execute a transaction, and only when the user's finger is engaged with the fingerprint detector (that is, only when the registered user is holding the portable terminal). The registered user may register trusted third parties so that they can execute transactions while holding the portable terminal.

It will be appreciated that embodiments of the invention have the advantage that transactions may be generated in a secure environment prior to the time when the transaction will be executed, thereby reducing the transaction time for the user at the self-service terminal.

## Claims

1. A portable terminal (10) having a communication port (22) and a transaction interface (26), whereby, a user may use the transaction interface (26) to enter a transaction for executing on a self-service terminal, **characterised in that** the portable terminal assigns a unique identification to the entered transaction and stores the entered transaction and the unique identification, whereby at some later time the user may transmit the entered transaction to a self-service terminal (50) that uses the unique identification to ensure that the same transaction is not executed twice.

2. A terminal according to claim 1, wherein the communication port (22) is adapted for wireless communication.

3. A terminal according to claim 1 or claim 2, wherein the transaction interface (24) has a user interface element (26) adapted to the requirements of the user.

4. A terminal according to any preceding claim, wherein the transaction interface (24) has an encryption/decryption facility (28) for storing the user's PIN to ensure that a third party cannot access the user's PIN by examining the storage area of the portable terminal.

5. A terminal according to any preceding claim, wherein the terminal uses the encryption/decryption facility (28) to encrypt any messages transmitted to an SST (50) to prevent fraud by third parties.

6. A terminal according to any preceding claim, wherein the portable terminal (10) is operable to assign a lifetime to each transaction so that if a transaction is not executed within that time period then the terminal (10) invalidates the transaction.

7. A terminal according to any preceding claim, wherein the portable terminal (10) is configurable to allow a user to assign a codename to a transaction, so that each transaction has a unique codename.

8. A method of conducting a transaction at a self service terminal using a portable terminal, the method including the step of entering a transaction at the portable terminal remote from the self service terminal, and being **characterised by** the steps of: assigning a unique identification to the entered transaction, storing the entered transaction and the unique identification on the portable terminal, conveying the portable terminal to the self service terminal, and transmitting the entered transaction via a communication port connecting the portable terminal with the self service terminal so that the entered transaction is executed by the self service terminal provided the unique identification and transaction does not match a previously transmitted unique identification and transaction.

## Patentansprüche

1. Tragbares Terminal (10) mit einem Kommunikationsanschluss (22) und einem Transaktions-Interface (26), wobei ein Benutzer das Transaktions-Interface (26) zur Eingabe von Transaktionen zur Durchführung an einem Selbstbedienungsterminal benutzen kann, **dadurch gekennzeichnet, dass** das tragbare Terminal der eingegebenen Transaktion eine individuelle Identifizierung zuordnet und die eingegebene Transaktion samt der individuellen Identifizierung speichert, so dass der Benutzer zu einem späteren Zeitpunkt die eingegebene Transaktion zu einem Selbstbedienungsterminal (50) übertragen kann, welches die individuelle Identifizierung zur Vergewisserung, dass dieselbe Transaktion nicht zweimal ausgeführt wird, benutzt.

2. Terminal nach Anspruch 1, bei welchem der Kommunikationsanschluss (22) für drahtlose Kommunikation ausgelegt ist.

3. Terminal nach Anspruch 1 oder 2, bei welchem das Transaktions-Interface (24) ein an die Bedürfnisse des Benutzers angepasstes Benutzer-Interface-Element (24) hat.

4. Terminal nach einem der vorstehenden Ansprüche, bei welchem das Transaktions-Interface (24) eine Verschlüsselungs/Entschlüsselungs-Einheit (28) zur Speicherung der PIN-Nummer des Benutzers hat, um sicherzustellen, dass ein Dritter durch Untersuchung des Speicherbereichs des tragbaren Terminals keinen Zugriff auf die PIN-Nummer des Benutzers hat.

5. Terminal nach einem der vorstehenden Ansprüche, bei welchem das Terminal zur Vermeidung von Betrug durch Dritte die Verschlüsselungs/Entschlüsselungs-Einheit (28) zur Verschlüsselung jeglicher an ein SST (50) übertragenen Nachrichten benutzt.

6. Terminal nach einem der vorstehenden Ansprüche, bei welchem das tragbare Terminal (10) jeder Transaktion einen Aktivierungszeitraum zuteilen kann, so dass dann, wenn eine Transaktion nicht innerhalb dieses Zeitraums ausgeführt wird, das Terminal (10) die Transaktion ungültig macht.

7. Terminal nach einem der vorstehenden Ansprüche, bei welchem das tragbare Terminal (10) so konfigurierbar ist, dass es einem Benutzer die Zuteilung eines Codeworts zu einer Transaktion erlaubt, derart, dass jede Transaktion ein individuelles Codewort hat.

8. Verfahren zur Durchführung einer Transaktion an einem Selbstbedienungsterminal unter Verwendung eines tragbaren Terminals mit dem Schritt der Eingabe einer Transaktion am tragbaren Terminal an einer vom Selbstbedienungsterminal entfernten Stelle, **gekennzeichnet durch** die Schritte:
- Zuordnung einer individuellen Identifizierung zu der eingegebenen Transaktion;
- Speichern der eingegebenen Transaktion und der individuellen Identifizierung im tragbaren Terminal,
- Transport des tragbaren Terminals zum Selbstbedienungsterminal,
- und Übertragung der eingegebenen Transaktion über einen Kommunikationsanschluss, welcher das tragbare Terminal mit dem Selbstbedienungsterminal verbindet, so dass die eingegebene Transaktion vom Selbstbedienungsterminal ausgeführt wird, sofern die individuelle Identifizierung und die Transaktion nicht mit einer bereits früher übertragenen individuellen Identifizierung und Transaktion übereinstimmen.

## Revendications

1. Terminal (10) portable ayant un port (22) de communication et un interface (26) de transaction, un utilisateur pouvant utiliser l'interface (26) de transaction pour introduire une transaction pour une exécution sur un terminal en self-service, **caractérisé en ce que** le terminal portable affecte une identification unique à la transaction introduite et mémorise la transaction introduite et l'identification unique, à un certain moment ultérieur l'utilisateur pouvant transmettre la transaction introduite à un terminal (50) en self-service qui utilise l'identification unique pour garantir que la même transaction n'est pas exécutée deux fois.

2. Terminal suivant la revendication 1, dans lequel le port (22) de communication est conçu pour une communication sans fil.

3. Terminal suivant la revendication 1 ou la revendication 2, dans lequel l'interface (24) de transaction comporte un élément (26) d'interface d'utilisateur adapté aux exigences de l'utilisateur.

4. Terminal suivant l'une quelconque des revendications précédentes, dans lequel l'interface (24) de transaction comporte une installation (28) de cryptage/décryptage pour mémoriser le PIN de l'utilisateur pour garantir qu'un tiers ne peut pas accéder au PIN de l'utilisateur en examinant la zone de stockage du terminal portable.

5. Terminal suivant l'une quelconque des revendications précédentes, dans lequel le terminal utilise l'installation (28) de cryptage/décryptage pour crypter tout message transmis à un SST (50) pour empêcher une fraude par des tiers.

6. Terminal suivant l'une quelconque des revendications précédentes, dans lequel le terminal (10) portable peut fonctionner pour affecter une durée de vie à chaque transaction de sorte que si une transaction n'est pas exécutée pendant cette période de temps alors le terminal (10) invalide la transaction.

7. Terminal suivant l'une quelconque des revendications précédentes, dans lequel le terminal (10) portable peut être configuré pour permettre à un utilisateur d'affecter un nom de code à une transaction, de sorte que chaque transaction a un nom de code unique.

8. Procédé pour effectuer une transaction à un terminal en self-service en utilisant un terminal portable, le procédé incluant l'étape qui consiste à introduire une transaction au terminal portable à distance du terminal en self-service, et qui est **caractérisé par** les étapes qui consistent à :
- affecter une identification unique à la transaction introduite, mémoriser la transaction introduite et l'identification unique sur le terminal portable, convoyer le terminal portable au terminal en self-service, et transmettre la transaction introduite par l'intermédiaire d'un port de communication reliant le terminal portable au terminal en self-service de sorte que la transaction introduite est exécutée par le terminal en self-service à condition que l'identification et la transaction uniques ne correspondent pas à une identification et une transaction uniques transmises précédemment.
